# EUROPÄISCHE PATENTSCHRIFT

(11) **EP 2 888 152 B1**
(45) Veröffentlichungstag und Bekanntmachung des Hinweises auf die Patenterteilung: **30.08.2017**
(21) Anmeldenummer: 13734051.9
(22) Anmeldetag: 02.07.2013
(51) Int. Cl.: B62D 21/11, B62D 27/02, B62D 29/04

(54) **ACHSTRÄGER UND VERFAHREN ZUR HERSTELLUNG EINES ACHSTRÄGERS**
AXLE CARRIER AND METHOD FOR PRODUCING AN AXLE CARRIER
SUPPORT D'ESSIEU ET PROCÉDÉ DE FABRICATION D'UN SUPPORT D'ESSIEU

(30) Priorität: 24.08.2012 DE 102012215098
(43) Veröffentlichungstag der Anmeldung: 01.07.2015
(73) Patentinhaber: Bayerische Motoren Werke Aktiengesellschaft, 80809 München (DE)
(72) Erfinder: KELLER, David, 80638 München (DE); LOTZ, Markus, 82054 Sauerlach (DE); ZANDER, Jörg, CH-8645 Jona (CH)
(86) Internationale Anmeldenummer: PCT/EP2013/063934
(87) Internationale Veröffentlichungsnummer: WO 2014/029539

(56) Entgegenhaltungen:
- US-A1- 2010 038 893
- US-B1- 6 408 515

## Beschreibung

Vorliegende Erfindung betrifft einen Achsträger für ein Kraftfahrzeug nach dem Oberbegriff des Anspruchs 1 sowie ein Verfahren zur Herstellung eines solchen Achsträgers.

Achsträger in Kraftfahrzeugen weisen in der Regel zwei Längsträger auf. Die Längsträger erstrecken sich im Wesentlichen in Fahrzeuglängsrichtung. Die beiden Längsträger sind über Querträger miteinander verbunden. Der Achsträger wird an der Fahrzeugkarosserie befestigt. An dem Achsträger wiederum werden die verschiedenen Lenker zur Aufhängung der Räder befestigt. Üblicherweise werden Achsträger im Kraftfahrzeug aus Metall, beispielsweise Aluminiumguss, gefertigt.

Aus der US 6,408,515 B1 ist ein Motortragrahmen bekannt, der mit einer Rahmenanordnung eines Fahrzeugs verbindbar ist, wobei Längs- und Querträger des Motortragrahmens aus unterschiedlichen Werkstoffen, beispielsweise einem metallischen Werkstoff und einem Komposit-Material bestehen und durch Kleben miteinander verbunden sein können.

Es ist Aufgabe vorliegender Erfindung, einen Achsträger anzugeben, der bei kostengünstiger Herstellung und Montage möglichst leichtbauend ist und eine wartungsarme und betriebssichere Funktion eines Kraftfahrzeugs gewährleistet. Insbesondere soll der Achsträger für die Serienfertigung geeignet sein. Des Weiteren ist es Aufgabe vorliegender Erfindung, ein entsprechendes Verfahren zur Herstellung des Achsträgers anzugeben.

Die Lösung der Aufgabe erfolgt durch die Merkmale der unabhängigen Ansprüche. Die abhängigen Ansprüche haben bevorzugte Weiterbildungen der Erfindung zum Gegenstand.

Somit wird die Aufgabe gelöst durch einen Achsträger für ein Kraftfahrzeug, umfassend zumindest einen ersten Träger und zumindest einen auf den ersten Träger aufgesteckten zweiten Träger. Zwischen einer Außenfläche des ersten Trägers und einer Innenfläche des zweiten Trägers ist ein Hohlraum ausgebildet. Dieser Hohlraum ist mit Klebstoff gefüllt, welcher durch zwei umlaufende Dichtungsringe abgedichtet ist. Der mit Klebstoff gefüllte Hohlraum sichert die Verbindung zwischen dem ersten Träger und dem zweiten Träger.

Erfindungsgemäß werden also die beiden Träger des Achsträgers durch ein Injektionsklebeverfahren miteinander verbunden. Besonders bevorzugt werden beim Achsträger die beiden Längsträger (erste Träger) aus Metall, insbesondere Aluminiumguss, ausgebildet. Um eine signifikante Gewichtseinsparung zu erreichen, bestehen die beiden Querträger (zweite Träger), die die beiden Längsträger miteinander verbinden, aus faserverstärktem Kunststoff, vorzugsweise kohlefaserverstärktem Kunststoff (CFK), z.B. als Flechtprofile. Durch die Ausbildung des erfindungsgemäßen Hohlraums, der mit Klebstoff ausgebildet wird, ist sichergestellt, dass sich die beiden Träger nicht berühren. Dadurch wird eine Korrosion an der Kontaktstelle zwischen faserverstärktem Kunststoff und Metall vermieden. Als zusätzlicher Korrosionsschutz ist eine Beschichtung der Längsträger z.B. mit Dickschicht-KTL vorgesehen.

Bezüglich des Hohlraums sind zwei Dichtungsringe vorgesehen. Die beiden Dichtungsringe schließen den Hohlraum ab, so dass beim Injektionskleben kein Klebstoff austritt. Gleichzeitig kann mit den beiden Dichtungsringen ein definierter Abstand bzw. eine definierte Spaltweite im Hohlraum gewährleistet werden. Insbesondere sind die beiden Dichtungsringe U-förmig ausgebildet und können somit auf die stirnseitigen Enden der jeweiligen Träger aufgesteckt werden.

In einem der Träger wird bevorzugt ein Kanal ausgebildet. Dieser Kanal führt im Inneren des Trägers zum Hohlraum hin. Über den Kanal kann Klebstoff in den Hohlraum injiziert werden. Besonders bevorzugt wird der Kanal in einem der ersten Träger, also vorzugsweise in einem Träger aus Metall, ausgebildet. Dies hat den Vorteil, dass am Einlauf in den Kanal ein Gewinde ausgebildet werden kann. Über dieses Gewinde kann ein Zulaufschlauch für den Klebstoff eingeschraubt werden. Das Gewinde stellt somit eine drucksichere Verbindung zwischen dem Zulaufschlauch und dem Kanal dar.

Bevorzugt wird der zweite Träger aus faserverstärktem Kunststoff auf den ersten Träger aufgesteckt. Da der Kanal bevorzugt im Metall des ersten Trägers ausgebildet wird, erstreckt sich der Kanal in Längsrichtung der Träger über den Hohlraum hinaus und ist somit im Herstellungsprozess gut zugänglich.

Die Erfindung umfasst des Weiteren ein Verfahren zur Herstellung eines Achsträgers für ein Kraftfahrzeug. Die im Rahmen des erfindungsgemäßen Achsträgers vorgestellten Unteransprüche und vorteilhaften Ausgestaltungen finden entsprechend vorteilhafte Anwendung auf das erfindungsgemäße Verfahren. Das Verfahren umfasst zumindest die folgenden Schritte: (i) Bereitstellen eines ersten Trägers und eines zweiten Trägers, (ii) Ineinanderstecken der beiden Träger, wobei zwischen einer Außenfläche des ersten Trägers und einer Innenfläche des zweiten Trägers ein Hohlraum ausgebildet ist, welcher durch zwei umlaufende Dichtungsringe abgedichtet ist, und (iii) Auffüllen des Hohlraums mit Klebstoff.

An den Enden der beiden Träger werden bevorzugt Dichtungsringe aufgesteckt. Wie oben bereits beschrieben, hat dies den Vorteil, dass sich die unterschiedlichen Materialien des Trägers nicht berühren und gleichzeitig ein definierter Spalt im Hohlraum vorgegeben ist. Während des Herstellungsverfahrens ergibt sich durch die Dichtungsringe ein weiterer Vorteil: Bei Verwendung der Dichtungsringe sind die beiden Träger allein durch das Zusammenstecken fixiert, wodurch sich die Handhabung im Herstellungsprozess vereinfacht.

In oder an den als Querträgern ausgebildeten zweiten Trägern können bevorzugt Lagerböcke zur Aufnahme eines Getriebes angeordnet werden. Je nach Design und Konstruktion kann einer der Lagerböcke in dem Überlappungsbereich der zwei verklebten Träger angeordnet sein. Um dies zu berücksichtigen, wird bevorzugt eine Ausnehmung im ersten und im zweiten Träger ausgebildet. In diese Ausnehmung kann später eine Aufnahme für eine Getriebelagerung eingesetzt werden. Während des Klebeverfahrens wird in die Ausnehmung ein Platzhalterelement, beispielsweise aus Kunststoff, eingesetzt. Durch dieses Platzhalterelement wird sichergestellt, dass während des Injizierens des Klebstoffs an den Kanten der Ausnehmung kein Klebstoff austritt. Nach dem Injizieren des Klebstoffes wird das Platzhalterelement wieder entfernt und eine entsprechende Aufnahme für das Getriebe bzw. ein Lagerbock kann eingepresst werden.

Die Injektion des Klebstoffes in den Hohlraum erfolgt bevorzugt mit Vakuum und/oder Überdruck. Zusätzlich zur Verbindung der beiden Träger über den Klebstoff, ist auch eine Sicherung mit beispielsweise Nieten, Schrauben o.Ä. möglich. Diese zusätzliche Sicherung kann auch nur zur Lagefixierung der beiden Träger während des Aushärtens des Klebstoffes genutzt werden.

Weitere Einzelheiten, Merkmale und Vorteile der Erfindung ergeben sich aus der nachfolgenden Beschreibung und den Figuren. Es zeigen:
- Figur 1: eine isometrische Ansicht eines erfindungsgemäßen Achsträgers gemäß einem Ausführungsbeispiel,
- Figur 2: eine Draufsicht auf den erfindungsgemäßen Achsträger gemäß dem Ausführungsbeispiel,
- Figur 3: einen in Figur 2 gekennzeichneten Schnitt A-A,
- Figur 4: ein Detail aus Figur 3, und
- Figur 5: einen in Figur 2 gekennzeichneten Schnitt B-B.

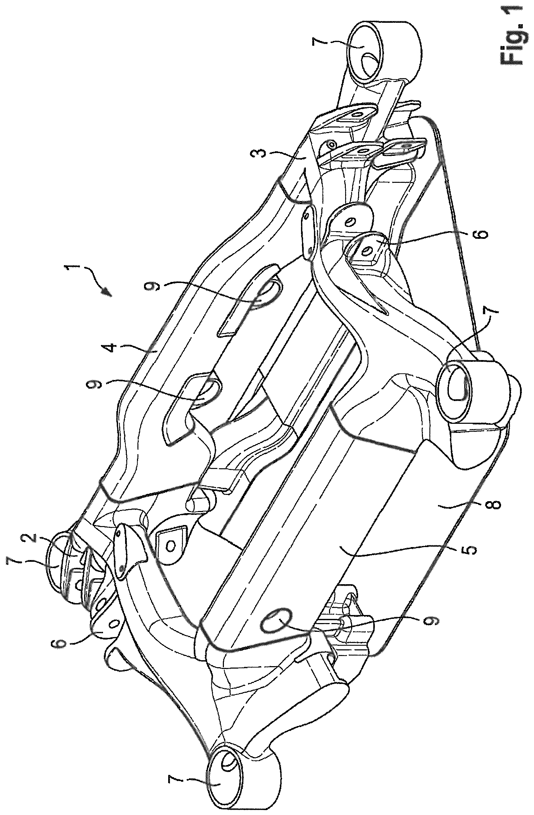

Anhand der Figuren 1 bis 5 wird ein Ausführungsbeispiel eines erfindungsgemäßen Achsträgers 1 beschrieben. Der gezeigte Achsträger 1 ist als Hinterachsträger für einen Pkw ausgebildet.

Der Achsträger 1 umfasst einen linken Längsträger 2 und einen rechten Längsträger 3. Die beiden Längsträger 2, 3 erstrecken sich im Wesentlichen in Fahrzeuglängsrichtung. Die beiden Längsträger 2, 3 sind verbunden über einen vorderen Querträger 4 und einen hinteren Querträger 5. Der linke und rechte Längsträger 2, 3 wird jeweils als "erster Träger" bezeichnet. Der vordere und hintere Querträger 4, 5 wird jeweils als "zweiter Träger" bezeichnet.

Als weitere Verbindung zwischen den beiden Längsträgern 2, 3 ist ein Schubfeld 8 vorgesehen.

An den Längsträgern 2, 3 sind mehrere Anbindungsstellen 6 zur Anbindung von Lenkern vorgesehen. An diesen Lenkern wiederum sind die Räder des Kraftfahrzeugs aufgehängt. Des Weiteren weist jeder Längsträger 2, 3 zwei Aufnahmen 7 auf. In die Aufnahmen 7 werden Lager eingesetzt, über die der Achsträger 1 am Unterboden des Kraftfahrzeugs befestigt ist.

Am vorderen Querträger 4 sind zwei Lagerböcke 9 angeklebt. Im hinteren Querträger 5 ist ein weiterer Lagerbock 9 angeordnet. An den Lagerböcken 9 wird ein Hinterachsgetriebe aufgehängt.

Die beiden Querträger 4, 5 (zweite Träger) und das Schubfeld 8 sind aus Kohlefaser-verstärktem Kunststoff (CFK) gefertigt. Die beiden Längsträger 2, 3 bestehen aus Aluminiumguss.

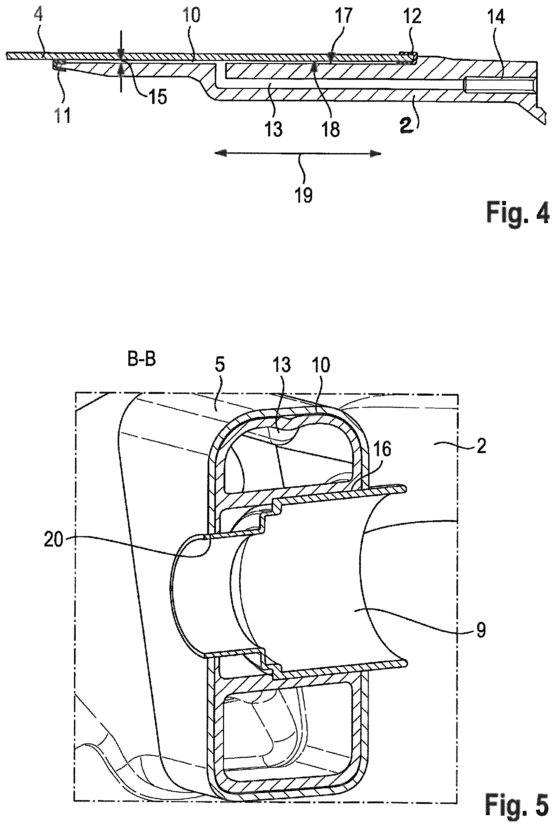

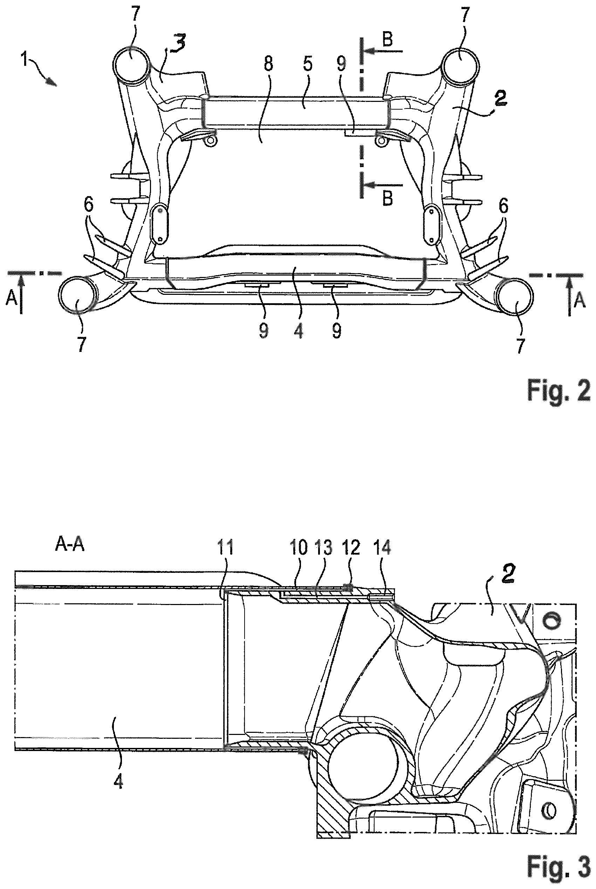

Figur 2 zeigt den Achsträger 1 in Draufsicht. In Figur 2 sind die Schnitte A-A und B-B gekennzeichnet. Die Schnittansicht zu A-A findet sich in Figur 3. Der Schnitt B-B ist in Figur 5 gezeigt.

Figur 3 zeigt den in Figur 2 gekennzeichneten Schnitt A-A. Zu sehen ist hier eine der vier Verbindungen zwischen einem Querträger 4, 5 und einem Längsträger 2, 3.

Figur 4 zeigt einen Detailausschnitt aus Figur 3. Zu sehen ist, dass der vordere Querträger 4 auf den linken Längsträger 2 aufgesteckt ist. Zwischen einer Außenfläche 17 am linken Längsträger 2 und einer Innenfläche am vorderen Querträger 4 ist ein Hohlraum 10 ausgebildet. Der Hohlraum 10 weist eine Spaltweite 15 auf. Die Spaltweite 15 wird sichergestellt durch zwei Dichtungsringe 11, 12. Der erste Dichtungsring 11 ist auf das Ende des linken Längsträgers 2 aufgesteckt. Der zweite Dichtungsring 12 ist auf das Ende des vorderen Querträgers 4 aufgesteckt. Die beiden Dichtungsringe 11, 12 sind jeweils U-förmig ausgestaltet und können somit stirnseitig auf die Längs- bzw. Querträger 2, 3, 4, 5 aufgesteckt werden.

In dem linken Längsträger 2 ist ein Kanal 13 ausgebildet. Über diesen Kanal 13 kann Klebstoff in den Hohlraum 10 injiziert werden.

Um eine montagefreundliche Zugänglichkeit des Kanals 13 zu gewährleisten, erstreckt sich der Kanal 13 in eingezeichneter Längsrichtung 19 über den Hohlraum 10 hinaus. Am Ende des Kanals 13 ist ein Gewinde 14 ausgebildet. In dieses Gewinde 14 kann ein Zulaufschlauch für den Klebstoff eingeschraubt werden. Über das Gewinde 14 ist somit eine sichere Verbindung zwischen dem Zulaufschlauch und dem Kanal 13 für eine Druckbeaufschlagung des Klebstoffes gegeben.

Die eingezeichnete Spaltweite 15 liegt bevorzugt zwischen 0,5 und 5 mm, so dass einerseits eine stabile Verklebung möglich ist und andererseits auch genügend Elastizität durch die Klebstoffdicke gewährleistet wird.

Das anhand der Figuren 3 und 4 erläuterte Injektionsklebeverfahren wird an allen vier Verbindungsstellen zwischen Längsträger 2, 3 und Querträger 4, 5 des gezeigten Achsträgers 1 angewandt.

Zusätzlich zu den Dichtungsringen 11, 12 können noch Abstandsnasen an der Außenfläche 17 und/oder Innenfläche 18 ausgebildet werden. Diese Abstandsnasen gewährleisten die Spaltweite 15. Die Abstandsnasen sind insbesondere so angeordnet, dass sie vom Klebstoff vollständig umspritzt werden, um so eine Korrosion zu vermeiden.

Figur 5 zeigt den in Figur 2 gekennzeichneten Schnitt B-B. Anhand von Figur 5 ist zu sehen, dass einer der Lagerböcke 9 im Überlappungsbereich des hinteren Querträgers 5 und des linken Längsträgers 2 liegt. Der Lagerbock 9 ist hier in eine Ausnehmung 20 eingesetzt. Die Ausnehmung 20 erstreckt sich fluchtend durch den hinteren Querträger 5 und den linken Längsträger 2. Während des Ausfüllens des Hohlraums 10 mit dem Klebstoff ist anstatt des gezeigten Lagerbocks 9 ein Platzhalterelement eingesetzt. Dieses Platzhalterelement stellt sicher, dass an den Kanten der Ausnehmung 20 kein Klebstoff austritt. Nach dem Injizieren des Klebstoffes wird das Platzhalterelement entfernt und der gezeigte Lagerbock 9 eingepresst, so dass eine Presspassung 16 gebildet wird.

### Bezugszeichenliste:

- 1: Achsträger
- 2: Linker Längsträger
- 3: Rechter Längsträger
- 4: Vorderer Querträger
- 5: Hinterer Querträger
- 6: Anbindungsstellen
- 7: Aufnahmen
- 8: Schubfeld
- 9: Lagerböcke
- 10: Hohlraum
- 11: Erster Dichtungsring
- 12: Zweiter Dichtungsring
- 13: Kanal
- 14: Gewinde
- 15: Spaltweite
- 16: Presspassung
- 17: Außenfläche
- 18: Innenfläche
- 19: Längsrichtung
- 20: Ausnehmung

## Patentansprüche

1. Achsträger (1) für ein Kraftfahrzeug, umfassend zumindest einen ersten Träger (2, 3) sowie zumindest einen auf den ersten Träger (2, 3) aufgesteckten zweiten Träger (4, 5), wobei einer der beiden Träger (2, 3) aus Metall, vorzugsweise Aluminiumguss, und der andere Träger (4, 5) aus faserverstärktem Kunststoff besteht, und diese beiden Träger miteinander verklebt sind,
**gekennzeichnet durch** einen mit Klebstoff gefüllten Hohlraum (10) zwischen einer Außenfläche (17) des ersten Trägers (2, 3) und einer Innenfläche (18) des zweiten Trägers (4, 5), welcher Hohlraum (10) durch zwei umlaufende Dichtungsringe (11, 12) abgedichtet ist.

2. Achsträger nach Anspruch 1, wobei gekennzeichnet, die zwei Dichtungsringe (11, 12) die beiden Träger (2, 3, 4, 5) auf Abstand halten, so dass keine Berührung zwischen den beiden Trägern (2, 3, 4, 5) stattfindet.

3. Achsträger nach Anspruch 1 oder 2, wobei in einem der beiden Träger (2, 3) ein Kanal (13) zum Injizieren des Klebstoffes in den Hohlraum (10) ausgebildet ist.

4. Achsträger nach Anspruch 3, wobei sich der Kanal (13) in Längsrichtung (19) der Träger (2, 3, 4, 5) über den Hohlraum (10) hinaus erstreckt.

5. Achsträger nach einem der vorhergehenden Ansprüche, **gekennzeichnet durch** zwei erste Träger (2, 3), die als Längsträger angeordnet sind, und zwei zweite Träger (4, 5), die als Querträger angeordnet sind, wobei die zwei Längsträger aus Metall bestehen und die zwei Querträger aus faserverstärktem Kunststoff bestehen.

6. Verfahren zur Herstellung eines Achsträgers für ein Kraftfahrzeug, umfassend die folgenden Schritte:
- Bereitstellen eines ersten Trägers (2, 3) und eines zweiten Trägers (4, 5), wobei einer der beiden Träger (2, 3) aus Metall, vorzugsweise Aluminiumguss, und der andere Träger (4, 5) aus faserverstärktem Kunststoff besteht,
- Aufsetzen eines ersten Dichtungsrings (11) auf ein Ende des ersten Trägers (2, 3) und eines zweiten Dichtungsrings (12) auf ein Ende des zweiten Trägers (4,5),
- Ineinanderstecken der beiden Träger (2, 3, 4, 5), wobei zwischen einer Außenfläche (17) des ersten Trägers (2, 3) und einer Innenfläche (18) des zweiten Trägers (4, 5) ein Hohlraum (10) ausgebildet ist, welcher durch die zwei umlaufenden Dichtungsringe (11, 12) abgedichtet ist und
- Auffüllen des Hohlraums (10) mit Klebstoff.

7. Verfahren nach Ansprüche 6, wobei im ersten und zweiten Träger (2, 3, 4, 5) eine fluchtende Ausnehmung (20) ausgebildet ist, in welche für das Auffüllen des Hohlraums (10) mit Klebstoff ein Platzhalterelement eingesetzt wird, welches nach dem Auffüllen wieder entfernt wird.

## Claims

1. An axle carrier (1) for a motor vehicle, comprising at least one first carrier (2, 3) and also at least one second carrier (4, 5), which is fitted onto the first carrier (2, 3), wherein one of the two carriers (2, 3) comprises metal, preferably cast aluminium, and the other carrier (4, 5) comprises fibre-reinforced plastic, and these two carriers are adhered to one another,
**characterised by** a cavity (10) filled with adhesive between an outer face (17) of the first carrier (2, 3) and an inner face (18) of the second carrier (4, 5), which cavity (10) is sealed by two peripheral ring seals (11, 12).

2. An axle carrier according to claim 1, wherein the two ring seals (11, 12) hold the two carriers (2, 3, 4, 5) at a distance so that there is no contact between the two carriers (2, 3, 4, 5).

3. An axle carrier according to claim 1 or 2, wherein a channel (13) for injecting the adhesive into the cavity (10) is formed in one of the two carriers (2, 3).

4. An axle carrier according to claim 3, wherein the channel (13) extends in the longitudinal direction (19) of the carriers (2, 3, 4, 5) beyond the cavity (10).

5. An axle carrier according to any one of the preceding claims, **characterised by** two first carriers (2, 3), which are arranged as longitudinal carriers, and two second carriers (4, 5), which are arranged as transverse carriers, wherein the two longitudinal carriers comprise metal and the two transverse carriers comprise fibre-reinforced plastic.

6. A method for producing an axle carrier for a motor vehicle, comprising the following steps:
- providing a first carrier (2, 3) and a second carrier (4, 5), wherein one of the two carriers (2, 3) comprises metal, preferably cast aluminium, and the other carrier (4, 5) comprises fibre-reinforced plastic,
- fitting a first ring seal (11) onto an end of the first carrier (2, 3) and fitting a second ring seal (12) onto an end of the second carrier (4, 5),
- fitting the two carriers (2, 3, 4, 5) one inside the other, wherein a cavity (10) is formed between an outer face (17) of the first carrier (2, 3) and an inner face (18) of the second carrier (4, 5), which cavity is sealed by the two peripheral ring seals (11, 12), and
- filling the cavity (10) with adhesive.

7. A method according to claim 6, wherein an aligned recess (20) is formed in the first and second carrier (2, 3, 4, 5), into which recess a place-holder element is inserted for the filling of the cavity (10) with adhesive, which place-holder element is removed again after the filling.

## Revendications

1. Support d'essieu (1) d'un véhicule comprenant au moins un premier support (2, 3) ainsi qu'au moins un second support (4, 5) emboîté sur le premier support (2, 3), l'un des deux supports (2, 3) étant réalisé en métal, de préférence en fonte d'aluminium tandis que l'autre support (4, 5) est réalisé en un matériau synthétique renforcé par des fibres et ces deux supports étant collés l'un à l'autre,
**caractérisé par**,
une cavité (10) remplie d'un adhésif située entre la surface externe (17) du premier support (2, 3) et la surface interne (18) du second support (4, 5), cette cavité (10) étant rendue étanche par deux bagues d'étanchéité périphériques (11, 12).

2. Support d'essieu conforme à la revendication 1,
**caractérisé en ce que**,
les deux bagues d'étanchéité (11, 12) maintiennent les deux supports (2, 3, 4, 5) à distance l'un de l'autre de sorte qu'il n'y ait pas de contact entre ces deux supports (2, 3, 4, 5).

3. Support d'essieu conforme à la revendication 1 ou 2,
dans lequel dans l'un des deux supports (2, 3) est formé un canal (13) permettant d'injecter l'adhésif dans la cavité (10).

4. Support d'essieu conforme à la revendication 3,
dans lequel le canal (13) s'étend dans la direction longitudinale (19) du support (2, 3, 4, 5) au-dessus de la cavité (10).

5. Support d'essieu conforme à l'une des revendications précédentes, **caractérisé par**
deux premiers supports (2, 3) qui sont montés en tant que supports longitudinaux et deux seconds supports (4, 5) qui sont montés en tant que supports transversaux, les deux supports longitudinaux étant réalisés en métal et les deux supports transversaux étant réalisés en un matériau synthétique renforcé par des fibres.

6. Procédé d'obtention d'un support d'essieu d'un véhicule comprenant les étapes suivantes consistant à :
- se procurer un premier support (2, 3) et un second support (4, 5), l'un de ces deux supports (2, 3) étant réalisé en métal, de préférence en fonte d'aluminium tandis que l'autre support (4, 5) est réalisé en un matériau synthétique renforcé par des fibres,
- positionner une première bague d'étanchéité (11) à une extrémité du premier support (2, 3) et une seconde bague d'étanchéité (12) à une extrémité du second support (4, 5),
- emboîter l'un dans l'autre les deux supports (2, 3, 4, 5), entre la surface externe (17) du premier support (2, 3) et la surface interne (18) du second support (4, 5) étant formée une cavité (10) qui est rendue étanche par les deux bagues d'étanchéité périphériques (11, 12), et
- remplir la cavité (10) d'un adhésif.

7. Procédé conforme à la revendication 6,
**caractérisé en ce que**,
dans le premier support et dans le second support (2, 3, 4, 5) est formé un évidement (20) en alignement dans lequel est introduit, pour permettre le remplissage de la cavité (10) avec l'adhésif, un élément de maintien en place qui est à nouveau enlevé après le remplissage.
